# EUROPEAN PATENT APPLICATION

(11) **EP 4 586 736 A1**
(43) Date of publication of application: **16.07.2025**
(21) Application number: 23862321.9
(22) Date of filing: 04.09.2023
(51) Int. Cl.: H04W 76/10

(54) **COMMUNICATION ESTABLISHMENT METHOD AND APPARATUS, TERMINAL DEVICE, AND NETWORK SIDE DEVICE**

(30) Priority: 09.09.2022 CN 202211103203
(71) Applicant: Vivo Mobile Communication Co., Ltd., Dongguan, Guangdong 523863 (CN)
(72) Inventor: CHENG, Sihan, Dongguan, Guangdong 523863 (CN)
(74) Representative: Winter, Brandl - Partnerschaft mbB
(86) International application number: PCT/CN2023/116666
(87) International publication number: WO 2024/051627

(57) **Abstract**

This application relates to a communication establishment method and apparatus, a terminal device, and a network side device, and belongs to the field of communication technologies. The communication establishment method according to an embodiment of this application includes: a first terminal device sends a first request, where the first request is used for establishing a video call with a second terminal device, and a sending condition of the first request includes: the first terminal device determines that a target data channel application is triggered, and that the second terminal device cannot use the target data channel application.

## Description

### CROSS-REFERENCE TO RELATED APPLICATIONS

This application claims priority to Chinese Patent Application No. 202211103203.4, filed with the China National Intellectual Property Administration on September 9, 2022 and entitled "COMMUNICATION ESTABLISHMENT METHOD AND APPARATUS, TERMINAL DEVICE, AND NETWORK SIDE DEVICE", which is incorporated herein by reference in its entirety.

### TECHNICAL FIELD

This application belongs to the field of communication technologies, and specifically relates to a communication establishment method and apparatus, a terminal device, and a network side device.

### BACKGROUND

The 3GPP (3rd Generation Partnership Project) standard introduces a mechanism of establishing a DC (Data Channel, data channel) during a call. An additional service, such as screen sharing, location sharing, or file transmission, may be performed during the call by using the DC, thereby bringing better experience to a user.

Different services correspond to different DC applications (data channel applications). The DC application may be dynamically downloaded to a terminal during a call, and does not need to be installed in advance on the terminal, which facilitates use by the user. For ease of description, the DC application is briefly referred to as an APP below.

If two communication parties enable an APP, the APP needs to be dynamically downloaded from a DC Server (DC server) first, and a corresponding application DC (application data channel) needs to be established for the APP. Different APPs have different QoS (Quality of Service, quality of service) requirements. For example, an AR application requires a low delay and a high throughput, and a screen sharing application requires good real-time performance. Usually, each APP needs to establish a corresponding application DC.

In a related technology, each UE can support different DC characteristics. For example, each UE completely supports no DC characteristic, or supports only some DC characteristics. When DC characteristics of two communication parties do not match, processing may be performed by a network side device such as a DCMF (Data Channel Media Function, data channel media function). For example, a UE-A supports a screen sharing characteristic, and a UE-B does not support DC or does not support the screen sharing characteristic. In this case, the UE-A may send screen information of the UE-A to the DCMF by using the DC, and the DCMF plays the screen information to the UE-B in a video form.

However, currently, two terminals trigger a DC application after establishing a video call, causing relatively limited application scenarios and poor user experience. For example, the UE-A and the UE-B are required to establish a video call before using a DC service. When the UE-A needs to use a screen sharing characteristic, the DCMF sends a screen shared video stream to the UE-B through a video call channel between the UE-B and the UE-A. If there is no video call between the UE-A and the UE-B, the screen sharing characteristic cannot be used, affecting experience of a user of the UE-A.

### SUMMARY

Embodiments of this application provide a communication establishment method and apparatus, a terminal device, and a network side device, to solve a problem that a data channel application cannot be normally used when DC capabilities supported by two terminal devices establishing a session are different.

According to a first aspect, a communication establishment method is provided, and is applied to a first terminal device. The method includes:
a first terminal device sends a first request, where the first request is used for establishing a video call with a second terminal device, and
a sending condition of the first request includes:
the first terminal device determines that a target data channel application is triggered, and that the second terminal device cannot use the target data channel application.

According to a second aspect, a communication establishment method is provided, and is applied to a first network side device. The method includes:
the first network side device sends a third request to a second terminal device, where the third request is used for establishing a video stream transmission connection between the second terminal device and a second network side device; and
a sending condition of the third request includes at least one of the following:
the first network side device receives first information sent by a third network side device, where the first information is used for indicating establishment of the video stream transmission connection between the second terminal device and the second network side device, or the first information is used for indicating anchoring of a video stream transmission connection of the second terminal device to the second network side device; and
the first network side device receives a first request sent by a first terminal device, where the first request is used for establishing a data channel, and the data channel corresponds to a target data channel application.

According to a third aspect, an information generation method is provided. The method includes:
a second terminal device generates and displays prompt information in a case that a first request is received,
where the first request is used for establishing a video call between a first terminal device and the second terminal device, and the first request carries information for indicating sending only, and/or information for indicating playing a video;
if the first request carries the information for indicating sending only, the prompt information is used for reminding a user to only receive the video call, and send no video call; and
if the first request carries the information for indicating playing a video, the prompt information is used for reminding the user to play the video.

According to a fourth aspect, a communication establishment apparatus is provided, and is applied to a first terminal device. The apparatus includes:
a first request sending module, configured to send a first request, where the first request is used for establishing a video call with a second terminal device; and
a sending condition of the first request includes:
the first terminal device determines that a target data channel application is triggered, and that the second terminal device cannot use the target data channel application.

According to a fifth aspect, a communication establishment apparatus is provided, and is applied to a first network side device. The apparatus includes:
a third request sending module, configured to send a third request to a second terminal device, where the third request is used for establishing a video stream transmission connection between the second terminal device and a second network side device; and
a sending condition of the third request includes at least one of the following:
the first network side device receives first information sent by a third network side device, where the first information is used for indicating establishment of the video stream transmission connection between the second terminal device and the second network side device, or the first information is used for indicating anchoring of a video stream transmission connection of the second terminal device to the second network side device; and
the first network side device receives a first request sent by a first terminal device, where the first request is used for establishing a data channel, and the data channel corresponds to a target data channel application.

According to a sixth aspect, a terminal device is provided. The terminal device includes a processor and a memory. The memory stores a program or an instruction runnable on the processor, and when executed by the processor, the program or the instruction implements the steps of the communication establishment method according to the first aspect or the information generation method according to the third aspect.

According to a seventh aspect, a network side device is provided, including a processor and a memory. The memory stores a program or an instruction runnable on the processor, and when executed by the processor, the program or the instruction implements the steps of the communication establishment method according to the second aspect.

According to an eighth aspect, a communication establishment system is provided, including: a terminal device and a network side device. The terminal device may be configured to perform the steps of the communication establishment method according to the first aspect. The network side device may be configured to perform the steps of the communication establishment method according to the second aspect.

According to a ninth aspect, a readable storage medium is provided. The readable storage medium stores a program or an instruction, and when executed by a processor, the program or the instruction implements the steps of the communication establishment method according to the first aspect or the second aspect, or implements the steps of the information generation method according to the third aspect.

According to a tenth aspect, a chip is provided. The chip includes a processor and a communication interface. The communication interface is coupled to the processor. The processor is configured to run a program or an instruction to implement the communication establishment method according to the first aspect, or to implement the second aspect or the information generation method according to the third aspect.

According to an eleventh aspect, a computer program/program product is provided. The computer program/program product is stored in a storage medium. The computer program/program product is executed by at least one processor to implement the steps of the communication establishment method according to the first aspect or the second aspect, or to implement the steps of the information generation method according to the third aspect.

According to a twelfth aspect, a transmission apparatus/device is provided. The transmission apparatus/device is configured to execute to implement the steps of the communication establishment method according to the first aspect or the second aspect, or to implement the steps of the information generation method according to the third aspect.

In the communication establishment method according to the embodiment of this application, the first terminal device may send the first request to establish a video call with the second terminal device in a case that it is determined that the target data channel application is triggered and that the second terminal device cannot use the target data channel application, so as to transmit data of the target data channel application to the second terminal device by using the newly added video call when the second terminal device cannot use the target data channel application. This improves a success rate of using a DC service between the two terminal devices, expands application scenarios, and improves user experience.

### BRIEF DESCRIPTION OF THE DRAWINGS

FIG. 1 is a block diagram of a wireless communication system to which an embodiment of this application is applicable;
FIG. 2 is a schematic flowchart of establishing a data channel in related technologies;
FIG. 3 is a flowchart of a communication establishment method according to an embodiment of this application;
FIG. 4 is a schematic flowchart of establishing a data channel according to an embodiment of this application;
FIG. 5 is another schematic flowchart of establishing a data channel according to an embodiment of this application;
FIG. 6 is a flowchart of another communication establishment method according to an embodiment of this application;
FIG. 7 is still another schematic flowchart of establishing a data channel according to an embodiment of this application;
FIG. 8 is a block diagram of a structure of a communication establishment apparatus according to an embodiment of this application;
FIG. 9 is a block diagram of a structure of another communication establishment apparatus according to an embodiment of this application;
FIG. 10 is a block diagram of a structure of a communication device according to an embodiment of this application;
FIG. 11 is a block diagram of a structure of a terminal device according to an embodiment of this application; and
FIG. 12 is a block diagram of a structure of a network side device according to an embodiment of this application.

### DETAILED DESCRIPTION

The technical solutions in embodiments of this application are clearly described below with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

The terms such as "first" and "second" in the specification and claims of this application are intended to distinguish between similar objects, but are not intended to describe a specific sequence or order. It should be understood that the terms used in such a way may be interchanged under appropriate circumstances so that the embodiments of this application can be implemented in an order other than those illustrated or described herein, the objects distinguished by "first" and "second" are usually of one type, and a quantity of objects is not limited. For example, one or more first objects may be provided. In addition, "and/or" in the specification and the claims indicates at least one of connected objects, and the character "/" generally indicates an "or" relationship between associated objects. The term "indication" in the specification and claims of this application may be an explicit indication or an implicit indication. The explicit indication may be understood as that a sender explicitly informs a receiver of an operation or a request result that needs to be performed in the sent indication. The implicit indication may be understood as that the receiver performs determining based on an indication sent by the sender, and determines, based on to a determining result, an operation or a request result that needs to be performed.

It should be noted that the technologies described in the embodiments of this application are not limited to a long term evolution (Long Term Evolution, LTE)/LTE-advanced (LTE-Advanced, LTE-A) system, and may be also applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier-frequency division multiple access (Single-carrier Frequency Division Multiple Access, SC-FDMA), and other systems. The terms "system" and "network" in the embodiments of this application are often used interchangeably, and the described technology can be applied to the systems and radio technologies mentioned above, and can be also applied to other systems and radio technologies. The following description describes a new radio (New Radio, NR) system for example purposes, and NR terms are used in most of the following descriptions, but these technologies can be also applied to applications other than NR system applications, such as 6th generation (6th Generation, 6G) communication systems.

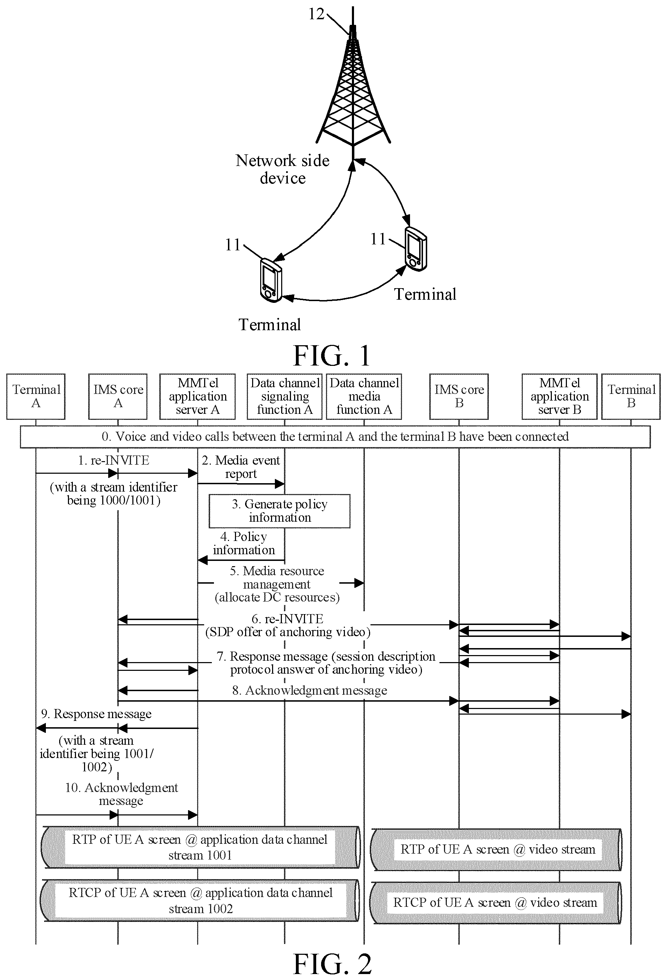

FIG. 1 is a block diagram of a wireless communication system to which an embodiment of this application is applicable. The wireless communication system includes a terminal device 11 and a network side device 12. The terminal device 11 may be a mobile phone, a tablet personal computer (Tablet Personal Computer), a laptop Computer (Laptop Computer) or a notebook computer, a personal digital assistant (Personal Digital Assistant, PDA), PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), a smart home (a household device with a wireless communication function, such as a refrigerator, a television, a washing machine, or furniture), a game console, a personal computer (personal computer, PC), an automated teller machine or a self-service machine, or other terminal-side devices. The wearable device includes a smartwatch, a smart band, a smart headset, smart glasses, smart jewelry (a smart bracelet, a smart chain bracelet, a smart ring, a smart necklace, a smart anklet, a smart ankle chain, or the like), a smart wrist strap, a smart garment, or the like. In addition to the foregoing terminal devices, the terminal device 11 may alternatively be a chip in a terminal, for example, a modem (Modem) chip or a system on chip (System on Chip, SoC). It should be noted that, a specific type of the terminal device 11 is not limited in the embodiment of this application. The network side device 12 may include an access network device or a core network device, where the access network device may also be referred to as a radio access network device, a radio access network (Radio Access Network, RAN), a radio access network function or a radio access network unit. The access network device may include a base station, a WLAN access point, a WiFi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmission-reception point (Transmitting Receiving Point, TRP) or some other appropriate term in the field. As long as a same technical effect is achieved, the base station is not limited to a specific technical vocabulary. It should be noted that in the embodiment of this application, only a base station in an NR system is described as an example, and a specific type of the base station is not limited. The core network device may include, but is not limited to, at least one of the following: a core network node, a core network function, a mobility management entity (MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, or L-NEF), a binding support function (Binding Support Function, BSF), an Application Function (Application Function, AF), and the like. It should be noted that, in the embodiment of this application, only a core network device in an NR system is described as an example, and a specific type of the core network device is not limited.

A communication establishment method according to an embodiment of this application is described in detail below through some embodiments and application scenarios thereof with reference to the accompanying drawings.

In a related technology, when two communication parties enable an APP (DC application, data channel application), the APP needs to be dynamically downloaded from a DC server first, and a corresponding Application DC needs to be established for the APP. It should be noted that, the DC may be divided into two types: a Bootstrap DC (bootstrap data channel) and an Application DC (application data channel). The Bootstrap DC is a data channel between a terminal device and a DC server, and is configured to download an APP. The Application DC is a data channel between terminal devices or between a terminal device and a DC server, and is configured to transmit data corresponding to an APP. Usually, a Bootstrap DC is first established, an APP is downloaded, and then an Application DC corresponding to the APP is established based on a requirement of the APP, such as a QoS requirement.

FIG. 2 is a schematic flowchart of establishing a data channel in related technologies. As shown in FIG. 2, a voice call and a video call have been established between a terminal A (UE-A) and a terminal B (UE-B). The UE-A is a DCMTSI (DataChannel Multimedia Telephony Service for IMS) terminal, that is, the UE-A supports an IMS (IP Multimedia Subsystem, IP multimedia subsystem) multimedia telephony service of a DC. The UE-B is an MTSI (Multimedia Telephony Service for IMS, multimedia telephony service for IMS) terminal, that is, the UE-B supports the IMS multimedia telephony service. When needing to use an APP during a call, the UE-A establishes an Application DC corresponding to the APP. A specific establishment process is as follows:
1. The UE-A initiates a SIP re-INVITE request to the UE-B, where the request is used for establishing an Application DC. It can be understood that the request includes indication information for establishing two Application DCs. The two Application DCs include a first data channel and a second data channel. A stream identifier (stream ID) of the first data channel may be 1000, and is used for transmitting an RTP (Real-time Transport Protocol, real-time transport protocol) data packet of video stream data. A stream identifier of the second data channel may be 1001, and is used for transmitting a RTCP (RTP Control Protocol, RTP control protocol) data packet of the video stream data. It should be noted that, a flow identifier is used for identifying a data channel. Usually, 0 to 999 are used for identifying a Bootstrap DC, and a flow identifier greater than or equal to 1000 is used for identifying an Application DC.
2. An AS (Application Server, application server) sends a Media Event Report (media event report) to a DCSF (Data Channel Signaling Function, data channel signaling function) based on Application DC related content included in the received SIP re-INVITE request. The media event report is used for requesting to establish an Application DC, and includes content related to the two application DCs that the UE-A requests to establish. The AS and the DCSF are both network side devices of a network in which the UE-A is located. The AS may be an MMTel AS (Multi Media Telephony Application Server, MMTel application server) shown in FIG. 2, or may be another AS such as a TAS (Telephony Application Server, telephony application server). This is not limited in this application.
3. The DCSF generate policy information, where the policy information is used for indicating a policy for establishing a DC. For example, the DCSF may determine, based on information of an APP corresponding to an Application DC that requests to be established, whether the UE-B supports a data channel, whether a network in which the UE-B is located supports a data channel, and whether the UE-B supports the APP corresponding to the Application DC that requests to be established. If the UE-B satisfies a first condition, the DCSF generates first policy information. The first policy information is used for indicating establishment of a data channel between the UE-A and the DCMF (Data Channel Media Function, data channel media function), and is used for indicating anchoring (anchoring) of a video stream (video media stream or video stream) transmission connection of the UE-B to the DCMF. The first condition may include at least one of the following: the UE-B supports no data channel; the network in which the UE-B is located supports no data channel; and the UE-B supports no APP corresponding to an Application DC that requests to be established. It can be understood that, if the UE-B does not satisfy the first condition, that is, the UE-B supports a data channel, the network in which the UE-B is located supports a data channel, and the UE-B supports an APP corresponding to an Application DC that requests to be established, the DSCF generates second policy information. The second policy information is used for indicating establishment of a data channel between the UE-A and the UE-B, so as to directly transmit data of the APP through the data channel between the UE-A and the UE-B.
4. The DCSF sends the policy information, that is, a DC Control, to the AS. The policy information may be the first policy information, or may be the second policy information.
5. The AS sends media resource management (Media Resource Management) information to the DCMF, where the media resource management information is used for requesting to allocate DCMF resources. The DCMF resources that request to be allocated are used for establishing a data channel between the UE-A and the DCMF, and is further used for establishing a video stream connection between the DCMF and the UE-B. It can be understood that a condition for the AS to send the media resource management information to the DCMF is: the AS receives the first policy information sent by the DCSF. If the AS receives the second policy information sent by the DCSF, the AS may directly trigger establishment of the data channel between the UE-A and the UE-B, without requesting allocation of the DCMF resources.
6. The AS sends a SIP re-INVITE request to the UE-B, where the SIP re-INVITE request is used for establishing an application data channel corresponding to the APP.

It can be understood that if the policy information received by the AS from the DCSF is the first policy information, the SIP re-INVITE request includes first request information for configuring a peer end of the video stream transmission connection of the UE-B as the DCMF. Specifically, the first request information includes an IP address and a port number of the DCMF, and is used for triggering establishment of a video stream transmission connection between the UE-B and the DCMF. Optionally, the video stream transmission connection includes an RTP connection. Optionally, the first request information may be session description protocol offer (Session Description Protocol offer, SDP offer) information, that is, an SDP offer of anchoring video (SDP offer of anchoring video) in FIG. 2, and the SDP offer includes the IP address and the port number of the DCMF.

If the policy information received by the AS from the DCSF is the second policy information, the SIP re-INVITE request includes second request information for establishing a data channel between the UE-A and the UE-B. The second request includes an IP address and a port number of the UE-A, and is used for triggering establishment of the data channel between the UE-B and the UE-A. It should be noted that, the SIP re-INVITE request sent by the AS to the UE-B is sent to the UE-B by using an IMS Core (IMS core network) that provides a service to the UE-B. Optionally, the second request information may be SDP offer information, that is, an SDP offer of anchoring video in FIG. 2, and the SDP offer includes the IP address and the port number of the UE-A.

7. The UE-B replies with a response message, where the response message may be a 200 OK message. The response message may include session description protocol answer (Session Description Protocol answer, SDP answer) SDP answer information, that is, an SDP answer of anchoring video (SDP answer of anchoring video) in FIG. 2. The SDP answer message includes an IP address and a port number of the UE-B.

8. The AS replies an acknowledgment message to the UE-B, where the acknowledgment message may be an ACK message (ACK for re-INVITE).

9. The AS sends a response message to the UE-A based on the response message sent by the UE-B. The response message may alternatively be a 200 OK message (200 OK for re-INVITE), and is used for notifying the UE-A that the data channel is successfully established.

10. The UE-A replies an acknowledgment message to the AS, where the acknowledgment message may alternatively be an ACK message (ACK for re-INVITE).

When the UE-A needs to use an APP during a call with the UE-B, if at least one of the following cases exists: the UE-B supports no data channel; the network in which the UE-B is located supports no data channel; and the UE-B supports no APP used by the UE-A, by the foregoing process, a data channel between the UE-A and the DCMF is established, and a video stream transmission connection between the UE-B and the DCMF is established. The APP in the UE-A may send data of the APP to the DCMF through the established data channel, and the DCMF sends the data of the APP to the UE-B through the video stream transmission connection to the UE-B.

However, in a related technology, two terminal devices trigger a DC application after establishing a video call, causing relatively limited application scenarios and poor user experience. For example, the UE-A and the UE-B are required to establish a video call before using a DC service, that is, before using an APP. When the UE-A needs to use the APP, the DCMF sends video stream data of the APP to the UE-B through a video call channel between the UE-B and the UE-A. If there is no video call between the UE-A and the UE-B, the APP cannot be used, affecting experience of a user of the UE-A. If there is a video call between the UE-A and the UE-B, after the UE-A sends the video stream data of the APP to the UE-B, a user of the UE-B cannot see a video of the user of the UE-A, affecting experience of the user of the UE-B.

To solve the foregoing problem, this application provides a communication establishment method, to establish a communication connection between a first terminal device and a second terminal device when a second terminal device supports no DC service, thereby improving a success rate of using a DC service between the two terminal devices.

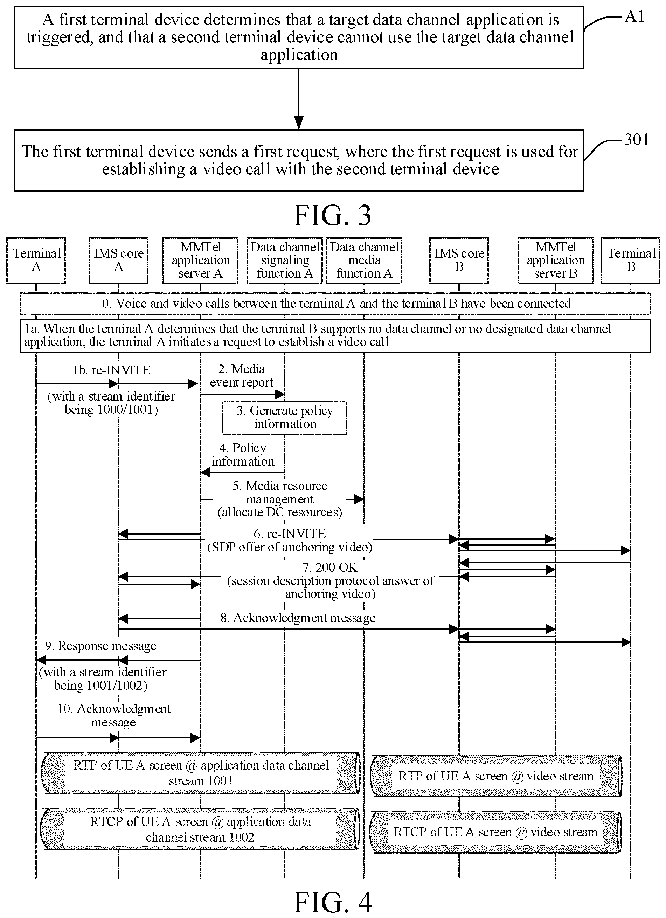

According to a first aspect, FIG. 3 is a flowchart of a communication establishment method according to an embodiment of this application. This method is applied to a first terminal device. As shown in FIG. 3, the method may specifically include:
Step 301: The first terminal device sends a first request, where the first request is used for establishing a video call with a second terminal device.

A sending condition of the first request includes:
A1: The first terminal device determines that a target data channel application is triggered, and that the second terminal device cannot use the target data channel application.

In the embodiment of this application, the first terminal device and the second terminal device each may be the terminal device 11 in FIG. 1. For descriptions of the terminal device 11, reference may be made to the foregoing related descriptions, and details are not described herein.

It should be noted that, a call is already established between the first terminal device and the second terminal device. The call may be a voice call and/or a video call, and is mainly used for implementing a conventional call service.

In a case that it is determined that the target data channel application is triggered, and it is determined that the second terminal device cannot use the target data channel application, the first terminal device sends the first request. The first request is used for establishing the video call with the second terminal device. The video call is mainly used for implementing a DC service, for example, transmitting data of an APP used in the first terminal device.

If the first terminal device detects a triggering operation performed by a user on the target data channel application, the first terminal device may determine that the target data channel application is triggered. The triggering operation may include, but is not limited to: a clicking operation performed by the user on a target data channel application icon displayed on a display interface of the second terminal device, a clicking operation performed on a function control of the target data channel application, and a voice activation instruction sent by the user for the target data channel application.

The first terminal device may receive a triggering operation performed by the user after establishing an IMS (IP Multimedia Subsystem, IP multimedia subsystem) session with the second terminal device. The IM session may include a voice session and/or a video session.

The target data channel application is a data channel application selected or used by the user. The target data channel application may include, but is not limited to: a screen sharing application, an AR rendering application, or a video special effect application. In a possible application scenario of the embodiment of this application, if the first terminal device detects a use operation performed by the user on the target data channel application, for example, if the first terminal device detects a selection operation and/or a download operation performed by the user on any data channel application in an application list, the first terminal device may determine that the data channel application is the target data channel application. The application list includes attribute information of each data channel application, and the attribute information includes, but is not limited to: a data channel characteristic required by the data channel application, a terminal device supporting the data channel application, and whether a network side device supports converting of data of the data channel application.

The first terminal device determines that the second terminal device cannot use the target data channel application in a case that a preset condition is satisfied, where the preset condition includes at least one of the following:
the second terminal device supports no data channel;
a network in which the second terminal device is located supports no data channel; and
the second terminal device supports no target data channel application.

In an example, the first terminal device may determine whether the second terminal device meets a preset condition based on the attribute information of each target data channel application in the application list and related information of the second terminal device, such as a characteristic of a data channel supported by the second terminal device and a characteristic of a data channel supported by the network in which the second terminal device is located. If the second terminal device meets the preset condition, it may be determined that the second terminal device cannot use the target data channel application.

FIG. 4 is a schematic flowchart of establishing a data channel according to an embodiment of this application. AS shown in FIG. 4, a first terminal device sends a first request to an AS in a case that it is determined that a second terminal device meets a preset condition, where the first request is used for establishing a video call with the second terminal device. The AS is a first network side device in the embodiment of this application.

It should be noted that, the first request carries session description information of a newly added video call. Specifically, description information of the video call that requests to be established may be added based on historical session description information carried in the first request. The description information may include an m^{th} row and an a^{th} row of the video call. The m^{th} row is used for specifying a multimedia information stream type of the call as a video call, a port number for sending the video call, a transport protocol, an encoding format, and other information. The a^{th} row is used for describing other attributes of the video call. The session description information may be an SDP offer.

Optionally, the first request carries information for indicating sending only; and/or information for indicating playing a video.

It should be noted that, attribute information of the video call may be carried in the a^{th} row of the session description information of the newly added video call, and may specifically include information for indicating sending only; and/or information for indicating playing a video. The information for indicating sending only is used for notifying the second terminal device that the second terminal device only needs to receive a video call, and does not need to send a video call. The information for indicating sending only may be "send only" information. The information for indicating playing a video is used for notifying the second terminal device to play video stream data of the video call.

The first terminal device may notify the second terminal device to only receive the video call and/or play the video stream data of the video call by carrying the above attribute information in the first request sent. This can effectively prevent a user holding the second terminal device from rejecting the first request sent by the first terminal device since the user does not want to send the video call, and improve the success rate of establishing a video call.

Optionally, the method further includes:
the first terminal device initiates a second request when determining that the video call is successfully established, where the second request is used for establishing a data channel, and the data channel corresponds to the target data channel application.

Optionally, when a first terminal receives a 200 OK response message, it is determined that the video call is successfully established; or when the first terminal receives an SDP answer, it is determined that the video call is successfully established.

As shown in FIG. 4, the first terminal device initiates a second request after determining that the video call is successfully established. The second request may be a SIP re-INVITE request and is used for establishing a data channel. The second request carries indication information for establishing two Application DCs. The two Application DCs include a first data channel and a second data channel. A stream identifier (stream ID) of the first data channel may be 1000, and is used for transmitting an RTP (Real-time Transport Protocol, real-time transport protocol) data packet of video stream data. A stream identifier of the second data channel may be 1001, and is used for transmitting a RTCP (RTP Control Protocol, RTP control protocol) data packet of the video stream data.

Optionally, that the first terminal device initiates a second request when determining that the video call is successfully established includes:
the first terminal device initiates the second request when receiving a first response message,
where the first response message carries description information for indicating the second terminal device to accept the video call.

The first terminal device may determine whether the video call is successfully established based on that the first response message with which the second terminal device replies to the first request is received. Specifically, if the first response message received by the first terminal device carries description information for indicating that the video call is successfully established, it may be determined that the video call is successfully established. On the contrary, if the response message received by the first terminal device carries description information for indicating that establishment of the video call fails, it may be determined that the establishment of the video call fails. The response message usually carries session description information, and the session description information may be an SDP answer. The description information for indicating that the video call is successfully established may be that a port number of an m^{th} row in the session description information corresponding to the newly added video call remain unchanged; and the description information for indicating that the establishment of the video call fails may be that the port number of the m^{th} row in the session description information corresponding to the newly added video call is set to 0.

It should be noted that, in a processing flow of establishing a data channel shown in FIG. 4, only the first terminal device is improved, and a processing flow after the first terminal device sends the second request, including a processing flow of each network side device, is the same as the processing flow shown in FIG. 2. Details are not described herein in the embodiment of this application.

In an optional embodiment of this application, the first request is further used for establishing a data channel, and the data channel corresponds to the target data channel application.

Optionally, that the data channel corresponds to the target data channel application can be understand as: the data channel is configured to transmit data of the target data channel application, or the data channel is specially established to use the target data channel application for communication.

In the communication establishment method according to this application, as shown in FIG. 4, when determining that the target data channel application is triggered and determining that the second terminal device cannot use the target data channel application, the first terminal device may send the first request for establishing a video call with the second terminal device, and send the second request for establishing a data channel after determining that the video call is successfully established. The first terminal device may alternatively initiate, when determining that the target data channel application is triggered and determining that the second terminal device cannot use the target data channel application, a first request for establishing a video call with the second terminal device and for establishing a data channel.

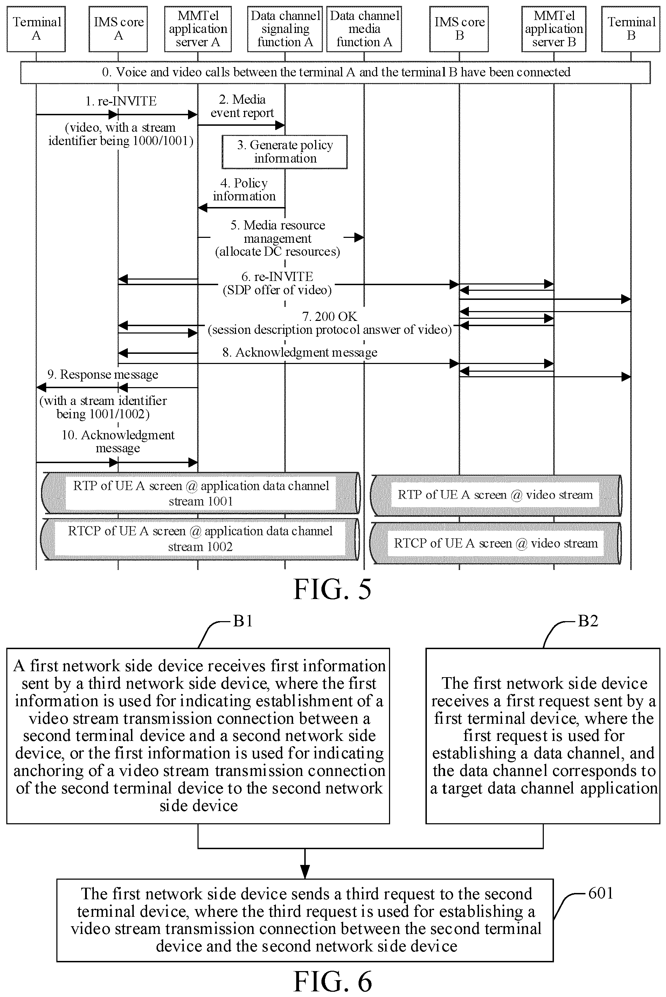

FIG. 5 is another schematic flowchart of establishing a data channel according to this application. As shown in FIG. 5, a first terminal device initiates a first request when determining to determine a target data channel application and determining that a second terminal device cannot use the target data channel application. The first request may be a SIP re-INVITE request. The first request carries session description information of a newly added video call, and further carries indication information for establishing two Application DCs. The two Application DCs include a first data channel and a second data channel. A stream identifier (stream ID) of the first data channel may be 1000, and is used for transmitting an RTP (Real-time Transport Protocol, real-time transport protocol) data packet of video stream data. A stream identifier of the second data channel may be 1001, and is used for transmitting a RTCP (RTP Control Protocol, RTP control protocol) data packet of the video stream data.

Optionally, the sending condition of the first request further includes:
A2: A second network side device supports interworking (interworking) on the target data channel application.

The second network side device is a DCMF. Optionally, that a second network side device supports interworking on the target data channel application includes:
the second network side device supports converting of data of the target data channel application that is sent by the first terminal device through the data channel into video stream data and sending of the video stream data to the second terminal device.

The video stream data is usually a video stream data packet that conforms to an RTP protocol.

Optionally, the sending condition of the first request further includes:
A3: The first terminal device supports interworking on the target data channel application.

Optionally, that the first terminal device supports interworking on the target data channel application includes:
the first terminal device supports sending of data of the target data channel application to the second network side device through the data channel.

In the embodiment of this application, in addition to including A1, the sending condition of the first request may further include A2. Further, the sending condition may alternatively include A1, A2, and A3.

It should be noted that, for different application scenarios, there are also different manners in which the second network side device supports interworking on the target data channel application.

In a possible application scenario of the embodiment of this application, the first terminal device supports no interworking on the target data channel application, and the first terminal device directly sends data of the target data channel application to the second network side device through the data channel. In this application scenario, the second network side device may encapsulate received data of the target data channel application into a data packet of the RTP protocol, and then send the encapsulated data packet to the second terminal device, so as to implement interworking on the target data channel application.

In another possible application scenario of the embodiment of this application, the first terminal device supports interworking on the target data channel application. Specifically, the first terminal device may first encapsulate data of the target data channel application into a data packet of the RTP protocol, and then encapsulate the data packet to the data channel and send the data packet to the second network side device. In this application scenario, after receiving an encapsulated DC data packet, the second network side device may directly remove a header of the DC data packet, and send an RTP data packet in the DC data packet to the second terminal device, so as to implement interworking on the target data channel application.

In a possible application scenario of this application, the method further includes:
the first terminal device receives a second response message, where the second response message carries description information for indicating that the data channel is successfully established.

In another possible application scenario of this application, the method further includes:
the first terminal device receives a third response message, where the third response message carries description information for indicating that establishment of the data channel fails.

In a data channel establishment process shown in FIG. 5, a first network side device AS sends a response message, that is, 200 OK for re-INVITE, to a first terminal device UE-A. Refer to step 9 in FIG. 5. It should be noted that, the response message includes two cases: a second response message for indicating that the data channel is successfully established, or a third response message for indicating establishment of the data channel fails.

If the first network side device determines that the second terminal device accepts the video call, and/or if the first network side device determines that establishment of a video stream transmission connection between the second terminal device and the second network side device is completed, the first terminal device receives a second response message, where the second response message carries description information for indicating that the data channel is successfully established. For example, session description information carried in the second response message still carries the a^{th} row of the data channel corresponding to the target data channel application.

On the contrary, if the first network side device determines that the second terminal device declines the video call, and/or if the first network side device determines that the establishment of the video stream transmission connection between the second terminal device and the second network side device fails, the first terminal device receives a third response message, where the third response message carries description information for indicating that establishment of the data channel fails. For example, session description information carried in the third response message still carries no a^{th} row corresponding to the target data channel application.

It should be noted that, all data channel applications of a terminal device share one m^{th} row in the session description information. If a port number of the m^{th} row is set to 0, it indicates that the terminal device supports no data channel. Each APP in the data channel corresponds to one a^{th} row. If the third response message received by the first terminal device carries no a^{th} row corresponding to the target data channel application, it indicates that the second terminal device rejects the target data channel application.

The term "indication" in the specification and claims of this application may be an explicit indication or an implicit indication. Herein, the carrying no a^{th} row of the data channel corresponding to the target data channel application can be understood as an implicit indication, that is, the carrying no a^{th} row of the data channel corresponding to the target data channel application indicates that the second terminal device refuses to establish the data channel corresponding to the target data channel application. In this case, the first terminal device needs to determine whether the data channel is successfully established based on the session description information carried in the response message.

In the communication establishment method according to the embodiment of this application, the first terminal device may send the first request to establish a video call with the second terminal device in a case that it is determined that the target data channel application is triggered and that the second terminal device cannot use the target data channel application, so as to transmit data of the target data channel application to the second terminal device by using the newly added video call when the second terminal device cannot use the target data channel application. This improves a success rate of using a DC service between the two terminal devices.

According to a second aspect, FIG. 6 is a flowchart of another communication establishment method according to an embodiment of this application. The method is applied to a first network side device. As shown in FIG. 6, the method may specifically include:

Step 601: The first network side device sends a third request to a second terminal device, where the third request is used for establishing a video stream transmission connection between the second terminal device and a second network side device; and
a sending condition of the third request includes at least one of the following:
B1: the first network side device receives first information sent by a third network side device, where the first information is used for indicating establishment of the video stream transmission connection between the second terminal device and the second network side device, or the first information is used for indicating anchoring of a video stream transmission connection of the second terminal device to the second network side device; and
B2: the first network side device receives a first request sent by a first terminal device, where the first request is used for establishing a data channel, and the data channel corresponds to a target data channel application.

In the embodiment of this application, the first network side device, the second network side device, and the third network side device each may be a core network device shown in FIG. 1. For example, the first network side device may be an MMTel AS, the second network side device may be a DCMF, and the third network side device may be a DCSF.

The first information is generated in a case that the third network side device determines that the second terminal device cannot use the target data channel application. In a case that a preset condition is satisfied, it may be determined that the second terminal device cannot use the target data channel application. The preset condition includes at least one of the following:
C1: the second terminal device supports no data channel;
C2: a network in which the second terminal device is located supports no data channel; and
C3: the second terminal device supports no target data channel application.

Optionally, in addition to including: it is determined that the second terminal device cannot use the target data channel application, a generation condition of the first information further includes: it is determined that the second network side device supports interworking on the target data channel application.

Optionally, the generation condition of the first information further includes: the first terminal device supports interworking on the target data channel application.

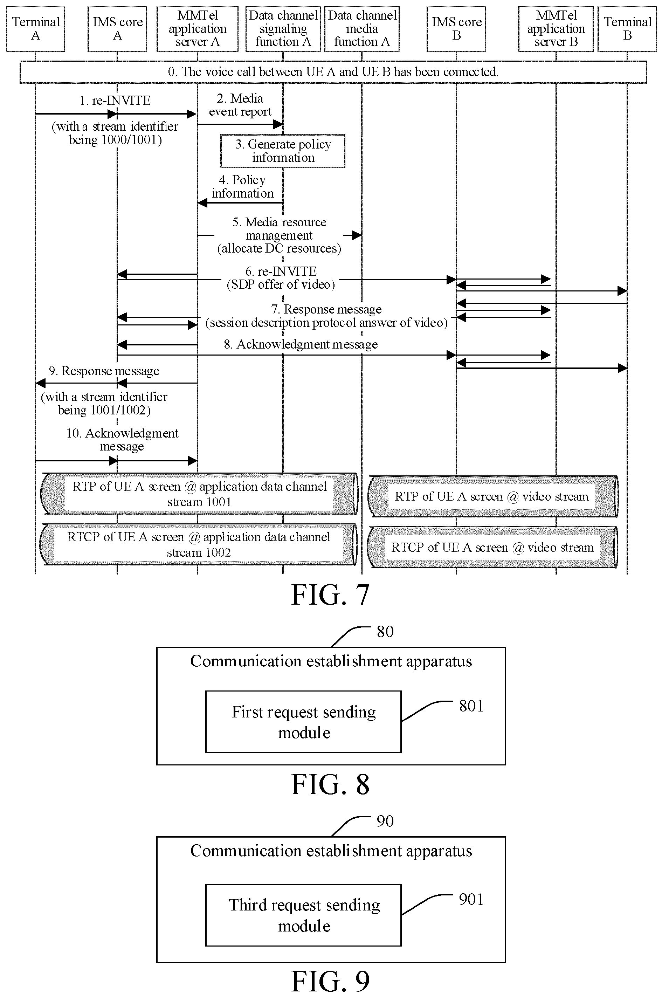

FIG. 7 is still another schematic flowchart of establishing a data channel according to this application. Steps 1 to 5 in FIG. 7 are the same as steps 1 to 5 in FIG. 2. For specific descriptions, reference may be made to the related description in the FIG. 2. Details are not described herein in this application. As shown in FIG. 7, a first terminal device UE-A initiates a first request. The first request may be a SIP re-INVITE request, and is used for establishing a data channel. In step 3 shown in FIG. 7, a DCSF may determine, based on information of a target data channel application corresponding to the data channel that requests to be established, whether a UE-B supports a data channel, whether a network in which the UE-B is located supports a data channel, and whether the UE-B supports the target data channel application. When the DCSF determines that the UE-B satisfies at least one of the foregoing preset conditions C1 to C3, first information is generated. In the data channel establishment process shown in FIG. 7, the first information is used for indicating establishment of a video stream transmission connection between the second terminal device and the second network side device.

In the data channel establishment process shown in FIG. 4, the first request sent by the first terminal device is used for establishing a video call with the second terminal device. In step 3 shown in FIG. 4, the DCSF may also generate the first information when determining that the UE-B satisfies at least one of the foregoing preset conditions C1 to C3. The first information is used for indicating anchoring (anchoring) of a video stream transmission connection of the second terminal device to the second network side device. Optionally, that a video stream transmission connection of the second terminal device is anchored to the second network side device includes: a peer end of the video stream transmission connection of the second terminal device is configured as the second network side device.

Optionally, the first request is further used for establishing a video call between the first terminal device and the second terminal device.

In the data channel establishment process shown in FIG. 5, the first request is used for establishing a data channel, and is further used for establishing a video call between the first terminal device and the second terminal device. In step 3 shown in FIG. 5, the DCSF may also generate the first information when determining that the UE-B satisfies at least one of the foregoing preset conditions C1 to C3. The first information is used for indicating establishment of a video stream transmission connection between the second terminal device and the second network side device.

In the embodiment of this application, in the data channel establishment process shown in any one of FIG. 4, FIG. 5, and FIG. 7, the first network side device sends a third request to the second terminal device, to establish the video stream transmission connection between the second terminal device and the second network side device. For details, reference may be made to step 6 in FIG. 4, FIG. 5, and FIG. 7. In different data channel establishment processes, first requests sent by the first terminal device are different, and first information generated by the third network side device is also different.

Optionally, the first request carries information for indicating sending only; and/or information for indicating playing a video.

It should be noted that, in the data channel establishment process shown in FIG. 4 or FIG. 5, the first request sent by the first terminal device may be used for establishing a video call with the second terminal device. Therefore, in the two data channel establishment manners, the first request may include attribute information of the video call. The attribute information may specifically include information for indicating sending only, and/or information for indicating playing a video.

In an example, the attribute information may be carried in an a^{th} row of session description information of a newly added video call. The information for indicating sending only in the attribute information is used for notifying the second terminal device that the second terminal device only needs to receive a video call, and does not need to send a video call. The information for indicating sending only may be "send only" information. The information for indicating playing a video in the attribute information is used for notifying the second terminal device to play video stream data of the video call.

Optionally, the third request includes request information for newly adding a video stream transmission connection corresponding to the second terminal device.

In the data channel establishment process shown in FIG. 5 or FIG. 7, the third request sent by the first network side device includes request information for newly adding a video stream transmission connection corresponding to the second terminal device, to newly establish a video stream transmission connection between the second terminal device and the second network side device. The request information may be an SDP offer, that is, an SDP offer of video in FIG. 5 or FIG. 7. The request information includes an IP address and a port number of the second network side device, and is sent to the second terminal device by using the third request, so that the second terminal device establishes a video stream transmission connection with the second network side device. The video stream transmission connection may be an RTP connection.

In the data channel establishment process shown in FIG. 4, the third request includes request information for anchoring the video stream transmission connection of the second terminal device to the second network side device, and may specifically include request information for configuring a peer end of the video stream transmission connection of the second terminal device as the second network side device. Similarly, the request information may include the IP address and the port number of the second network side device, so that the second terminal device modifies the peer end of the video transmission connection from the first terminal device to the second network side device.

Optionally, the method further includes:
the first network side device sends a second response message to the first terminal device, where the second response message carries description information for indicating that the data channel is successfully established,
where a sending condition of the second response message includes at least one of the following:
   the first network side device determines that the second terminal device accepts the video call; and
   the first network side device determines that establishment of the video stream transmission connection between the second terminal device and the second network side device is completed.

Optionally, the method further includes:
the first network side device sends a third response message to the first terminal device, where the third response message carries description information for indicating that establishment of the data channel fails,
where a sending condition of the third response message includes at least one of the following:
   the first network side device determines that the second terminal device declines the video call; and
   the first network side device determines that the establishment of the video stream transmission connection between the second terminal device and the second network side device fails.

In the data channel establishment process shown in FIG. 5 or FIG. 7, the first network side device AS sends a response message, that is, 200 OK for re-INVITE, to the first terminal device UE-A. Refer to step 9 in FIG. 5 or FIG. 7. It should be noted that, the response message includes two cases: a second response message for indicating that the data channel is successfully established, or a third response message for indicating establishment of the data channel fails.

If the first network side device determines that the second terminal device accepts the video call, and/or if the first network side device determines that establishment of a video stream transmission connection between the second terminal device and the second network side device is completed, the first network side device sends a second response message to the first terminal device, where the second response message carries description information for indicating that the data channel is successfully established. For example, session description information carried in the second response message still carries the a^{th} row of the data channel corresponding to the target data channel application.

On the contrary, if the first network side device determines that the second terminal device declines the video call, and/or if the first network side device determines that establishment of a video stream transmission connection between the second terminal device and the second network side device fails, the first network side device sends a third response message to the first terminal device, where the third response message carries description information for indicating that establishment of the data channel fails. For example, session description information carried in the third response message still carries no a^{th} row corresponding to the target data channel application.

In the communication establishment method according to the embodiment of this application, the first network side device may send the third request when satisfying the sending condition, to establish the video stream transmission connection between the second terminal device and the second network side device. Therefore, the second network side device sends, to the second terminal device through the video stream transmission connection between the second network side device and the second terminal device, video stream data of the target data channel application that is forwarded by the first terminal device through the data channel. This improves a success rate of using a DC service between the two terminal devices.

The communication establishment method according to the embodiment of this application may be performed by a communication establishment apparatus. A communication establishment apparatus according to an embodiment of this application is described with an example in which the communication establishment apparatus performs the communication establishment method according to the first aspect or the second aspect in the embodiment of this application.

According to a third aspect, an embodiment of this application provides an information generation method. The method is applied to a second terminal device, and may specifically include:
a second terminal device generates and displays prompt information in a case that a first request is received.

The first request is used for establishing a video call between a first terminal device and the second terminal device, and the first request carries information for indicating sending only, and/or information for indicating playing a video.

If the first request carries the information for indicating sending only, the prompt information is used for reminding a user to only receive the video call, and send no video call; and
if the first request carries the information for indicating playing a video, the prompt information is used for reminding the user to play video stream data of the video call.

When receiving the first request for establishing a video call between the first terminal device and the second terminal device, the second terminal device generates prompt information to remind the user to only receive the video call and send no video call, and/or to play video stream data of the video call. This can effectively prevent a user holding the second terminal device from rejecting the first request sent by the first terminal device since the user does not want to send the video call, and improve the success rate of establishing a video call.

According to a fourth aspect, an embodiment of this application provides a communication establishment apparatus. The apparatus can be applied to a first terminal device. FIG. 8 is a block diagram of a structure of a communication establishment apparatus according to an embodiment of this application. As shown in FIG. 8, the apparatus 80 may specifically include:
a first request sending module 801, configured to send a first request, where the first request is used for establishing a video call with a second terminal device; and
a sending condition of the first request includes:
the first terminal device determines that a target data channel application is triggered, and that the second terminal device cannot use the target data channel application.

Optionally, the apparatus further includes:
a second request sending module, configured to send a second request when determining that the video call is successfully established, where the second request is used for establishing a data channel, and the data channel corresponds to the target data channel application.

Optionally, the first request is further used for establishing a data channel, and the data channel corresponds to the target data channel application.

Optionally, the first terminal device determines that the second terminal device cannot use the target data channel application in a case that a preset condition is satisfied, where the preset condition includes at least one of the following:
the second terminal device supports no data channel;
a network in which the second terminal device is located supports no data channel; and
the second terminal device supports no target data channel application.

Optionally, the first request carries information for indicating sending only; and/or information for indicating playing a video.

Optionally, the sending condition of the first request further includes:
a second network side device supports interworking on the target data channel application.

Optionally, the sending condition of the first request further includes:
the first terminal device supports interworking on the target data channel application.

Optionally, that a second network side device supports interworking on the target data channel application includes:
the second network side device supports converting of data of the target data channel application that is sent by the first terminal device through the data channel into video stream data and sending of the video stream data to the second terminal device.

Optionally, that the first terminal device supports interworking on the target data channel application includes:
the first terminal device supports sending of data of the target data channel application to the second network side device through the data channel.

Optionally, the second request sending module includes:
a second request sending submodule, configured to send a second request when receiving a first response message,
where the first response message carries description information for indicating the second terminal device to accept the video call.

Optionally, the apparatus further includes:
a second response message receiving module, configured to receive a second response message, where the second response message carries description information for indicating that the data channel is successfully established.

Optionally, the apparatus further includes:
a third response message receiving module, configured to receive a third response message, where the third response message carries description information for indicating that establishment of the data channel fails.

According to a fifth aspect, an embodiment of this application provides another communication establishment apparatus. The apparatus can be applied to a first network side device. FIG. 9 is a block diagram of a structure of a communication establishment apparatus according to an embodiment of this application. As shown in FIG. 9, the apparatus 90 may specifically include:
a third request sending module 901, configured to send a third request to a second terminal device, where the third request is used for establishing a video stream transmission connection between the second terminal device and a second network side device; and
a sending condition of the third request includes at least one of the following:
the first network side device receives first information sent by a third network side device, where the first information is used for indicating establishment of the video stream transmission connection between the second terminal device and the second network side device, or the first information is used for indicating anchoring of a video stream transmission connection of the second terminal device to the second network side device; and
the first network side device receives a first request sent by a first terminal device, where the first request is used for establishing a data channel, and the data channel corresponds to a target data channel application.

Optionally, the first request is further used for establishing a video call between the first terminal device and the second terminal device.

Optionally, the first request carries information for indicating sending only; and/or information for indicating playing a video.

Optionally, the third request includes request information for newly adding a video stream transmission connection corresponding to the second terminal device.

Optionally, that the first information is used for indicating anchoring of a video stream transmission connection of the second terminal device to the second network side device includes:
the first information is used for indicating a peer end of the video stream transmission connection of the second terminal device to be configured as the second network side device.

Optionally, the apparatus further includes:
a second response message sending module, configured to send a second response message to the first terminal device, where the second response message carries description information for indicating that the data channel is successfully established,
where a sending condition of the second response message includes at least one of the following:
   the first network side device determines that the second terminal device accepts the video call; and
   the first network side device determines that establishment of the video stream transmission connection between the second terminal device and the second network side device is completed.

Optionally, the apparatus further includes:
a third response message sending module, configured to send a third response message to the first terminal device, where the third response message carries description information for indicating that establishment of the data channel fails,
where a sending condition of the third response message includes at least one of the following:
the first network side device determines that the second terminal device declines the video call; and
the first network side device determines that the establishment of the video stream transmission connection between the second terminal device and the second network side device fails.

Optionally, the first network side device includes an application server in a network in which the first terminal device is located.

Optionally, the second network side device includes a data channel media function in the network in which the first terminal device is located.

Optionally, the third network side device includes a data channel signaling function in the network in which the first terminal device is located.

The communication establishment apparatus in the embodiment of this application may be an electronic device, such as an electronic device with an operating system, or may be a component in the electronic device, such as an integrated circuit or a chip. The electronic device may be a terminal or another device other than the terminal. For example, the terminal may include, but is not limited to, the types of the terminal device 11 listed above, and the another device may be a server, a network attached storage (Network Attached Storage, NAS), or the like. This is not specifically limited in the embodiment of this application.

The communication establishment apparatus according to the embodiment of this application can implement each process implemented in the method embodiments of FIG. 3 and FIG. 6, and achieve the same technical effect. To avoid repetition, details are not described herein.

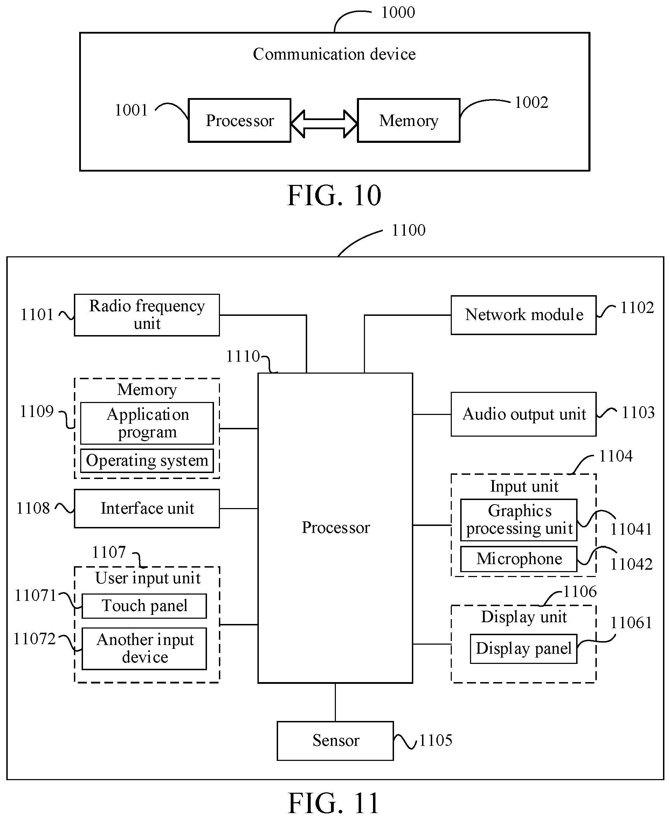

Optionally, as shown in FIG. 10, an embodiment of this application further provides a communication device 1000, including a processor 1001 and a memory 1002. The memory 1002 stores a program or an instruction runnable on the processor 1001. For example, when the communication device 1000 is a terminal device, the program or the instruction, when executed by the processor 1001, implements each step of the communication establishment method embodiment according to the first aspect, which can achieve the same technical effect. When the communication device 1000 is a network side device, the program or the instruction, when executed by the processor 1001, implements each step of the communication establishment method embodiment according to the second aspect, which can achieve the same technical effect. To avoid repetition, details are not described herein.

An embodiment of this application further provides a terminal device. FIG. 11 is a block diagram of a structure of a terminal device according to an embodiment of this application.

The terminal device 1100 includes, but is not limited to, at least some of a radio frequency unit 1101, a network module 1102, an audio output unit 1103, an input unit 1104, a sensor 1105, a display unit 1106, a user input unit 1107, an interface unit 1108, a memory 1109, and a processor 1110.

It can be understood by a person skilled in the art that the terminal device 1100 may further include a power supply (such as a battery) for supplying power to various components. The power supply may be logically connected to the processor 1110 by using a power management system, so as to achieve charging, discharging, power consumption management and other functions by using the power management system. The terminal device structure shown in FIG. 11 does not constitute a limitation on the terminal device. The terminal device may include more or fewer components than those shown, or combine some components, or have different component arrangements. Details are not described herein.

It should be understood that in the embodiment of this application, the input unit 1104 may include a graphics processing unit (Graphics Processing Unit, GPU) 11041 and a microphone 11042. The graphics processing unit 11041 processes image data of a still picture or a video that is obtained by an image acquisition apparatus (for example, a camera) in a video acquisition mode or an image acquisition mode. The display unit 1106 may include a display panel 11061, and the display panel 11061 may be configured in the form of a liquid crystal display, an organic light emitting diode, or the like. The user input unit 1107 includes at least one of a touch panel 11071 and another input device 11072. The touch panel 11071 is also referred to as a touchscreen. The touch panel 11071 may include two parts: a touch detection apparatus and a touch controller. The another input device 11072 may include, but is not limited to, a physical keyboard, a functional key (such as a volume control key or an on/off key), a track ball, a mouse, and a joystick. Details are not described herein.

In the embodiment of this application, after receiving downlink data from a network side device, the radio frequency unit 1101 may transmit the data to the processor 1110 for processing. In addition, the radio frequency unit 1101 may send uplink data to the network side device. Generally, the radio frequency unit 1101 includes, but is not limited to, an antenna, an amplifier, a transceiver, a coupler, a low noise amplifier, and a duplexer.

The memory 1109 may be configured to store a software program or an instruction and various data. The memory 1109 may mainly include a first storage area for storing a program or an instruction and a second storage area for storing data, where the first storage area may store an operating system, an application program or an instruction required for at least one function (such as a sound playing function and an image playing function), and the like. In addition, the memory 1109 may include a volatile memory or a non-volatile memory, or the memory 1109 may include a volatile memory and a non-volatile memory. The non-volatile memory may be a read-only memory Read-Only Memor12, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 in the embodiment of this application includes, but is not limited to, these and any other suitable types of memories.

The processor 1110 may include one or more processing units. Optionally, the processor 1110 integrates an application processor and a modem processor, where the application processor mainly processes operations involving an operating system, a user interface, an application program, and the like, and the modem processor mainly processes wireless communication signals, such as a baseband processor. It can be understood that, the modem processor may not be integrated into the processor 1110.

In an optional embodiment of this application, when the processor determines that a sending condition is satisfied, the radio frequency unit 1101 is configured to send a first request, where the first request is used for establishing a video call with a second terminal device; and
a sending condition of the first request includes:
the first terminal device determines that a target data channel application is triggered, and that the second terminal device cannot use the target data channel application.

Optionally, when the processor determines that the video call is successfully established, the radio frequency unit 1101 is configured to send a second request, where the second request is used for establishing a data channel, and the data channel corresponds to the target data channel application.

Optionally, the first request is further used for establishing a data channel, and the data channel corresponds to the target data channel application.

Optionally, the processor determines that the second terminal device cannot use the target data channel application in a case that a preset condition is satisfied, where the preset condition includes at least one of the following:
the second terminal device supports no data channel;
a network in which the second terminal device is located supports no data channel; and
the second terminal device supports no target data channel application.

Optionally, the first request carries information for indicating sending only; and/or information for indicating playing a video.

Optionally, the sending condition of the first request further includes:
a second network side device supports interworking on the target data channel application.

Optionally, the sending condition of the first request further includes:
the first terminal device supports interworking on the target data channel application.

Optionally, that a second network side device supports interworking on the target data channel application includes:
the second network side device supports converting of data of the target data channel application that is sent by the first terminal device through the data channel into video stream data and sending of the video stream data to the second terminal device.

Optionally, that the first terminal device supports interworking on the target data channel application includes:
the first terminal device supports sending of data of the target data channel application to the second network side device through the data channel.

Optionally, the radio frequency unit 1101 sends a second request, and is specifically configured to:
send the second request when receiving a first response message,
where the first response message carries description information for indicating the second terminal device to accept the video call.

Optionally, the radio frequency unit 1101 is further configured to receive a second response message, where the second response message carries description information for indicating that the data channel is successfully established.

Optionally, the radio frequency unit 1101 is further configured to receive a third response message, where the third response message carries description information for indicating that establishment of the data channel fails.

Optionally, the processor determines, in a case that a selection operation and/or a download operation performed by a user on any data channel application in an application list is detected, that the data channel application is the target data channel application.

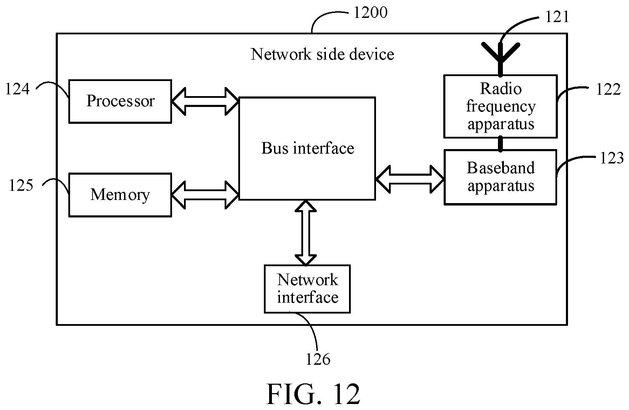

An embodiment of this application further provides a network side device. As shown in FIG. 12, the network side device 1200 includes: an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information through the antenna 121 and sends the received information to the baseband apparatus 123 for processing. In a downlink direction, the baseband apparatus 123 processes information to be sent and sends processed information to the radio frequency apparatus 122. The radio frequency apparatus 122 processes the received information and sends processed information through the antenna 121.

The method performed by the network side device in the above embodiment may be implemented in the baseband apparatus 123. The baseband apparatus 123 includes a baseband processor.

For example, the baseband apparatus 123 may include at least one baseband board, and a plurality of chips are arranged on the baseband board. As shown in FIG. 12, one of the chips is, for example, a baseband processor, and is connected to the memory 125 through a bus interface, so as to invoke a program in the memory 125 to perform an operation of a network device shown in the above method embodiment.

The network side device may further include a network interface 126. The interface is, for example, a common public radio interface (common public radio interface, CPRI).

Specifically, the network side device 1200 according to the embodiment of this application further includes: an instruction or a program that is stored in the memory 125 and runnable on the processor 124. The processor 124 invokes the instruction or the program in the memory 125 to perform the method shown in FIG. 6, to achieve the same technical effect. To avoid repetition, details are not described herein.

Specifically, an embodiment of this application further provides a network side device. As shown in FIG. 12, the network side device 1200 includes: a processor 1201, a network interface 1202, and a memory 1203. The network interface 1202 is, for example, a common public radio interface (common public radio interface, CPRI).

Specifically, the network side device 1200 according to the embodiment of this application further includes: an instruction or a program that is stored in the memory 1203 and runnable on the processor 1201. The processor 1201 invokes the instruction or the program in the memory 1203 to perform the method shown in FIG. 1111, to achieve the same technical effect. To avoid repetition, details are not described herein.

An embodiment of this application further provides a readable storage medium. A program or an instruction is stored on the readable storage medium. The program or the instruction, when executed by a processor, implements each process of the above-mentioned communication establishment method embodiment or information generation method embodiment, which can achieve the same technical effect. To avoid repetition, details are not described herein.

The processor is the processor in the terminal in the above-mentioned embodiment. The readable storage medium includes a computer-readable storage medium, such as computer read-only memory ROM, a random access memory RAM, a magnetic disk, or a compact disc.

An embodiment of this application further provides a chip. The chip includes a processor and a communication interface. The communication interface is coupled to the processor, and the processor is configured to run a program or an instruction to implement each process of the above-mentioned communication establishment method embodiment or information generation method embodiment, which can achieve the same technical effect. To avoid repetition, details are not described herein.

It should be understood that the chip mentioned in the embodiment of this application may also be referred to as a system on chip, a system chip, a chip system, a system-on-a-chip, or the like.

An embodiment of this application further provides a computer program/program product. The computer program/program product is stored on a storage medium. The computer program/program product is executed by at least one processor to implement each process of the above-mentioned communication establishment method embodiment or information generation method embodiment, which can achieve the same technical effect. To avoid repetition, details are not described herein.

An embodiment of this application further provides a communication establishment system, including: a terminal device and a network side device. The terminal device may be configured to perform the steps of the communication establishment method according to the first aspect. The network side device may be configured to perform the steps of the communication establishment method according to the second aspect.

It should be noted that, herein, terms "including", "comprising" or any other variants thereof are intended to cover non-exclusive inclusion, so that a process, method, article or apparatus including a series of elements includes not only those elements but also other elements not explicitly listed, or elements inherent to such a process, method, article or apparatus. Without further limitation, an element defined by the phrase "including a ..." does not exclude the presence of an additional identical element in the process, method, article or apparatus including the element. In addition, it should be noted that the scope of the method and apparatus in the implementations of this application is not limited to performing functions in the order shown or discussed, but also may include performing functions in a substantially simultaneous manner or in a reverse order based on the functions involved. For example, the described method may be performed in an order different from that described, and various steps may be further added, omitted or combined. In addition, features described with reference to some examples can be combined in other examples.

By the description of the above implementations, a person skilled in the art can clearly understand that the method in the above-mentioned embodiments may be implemented by software and a necessary general-purpose hardware platform, or certainly, by hardware, but the former is a better implementation in many cases. Based on this understanding, the technical solution of this application essentially, or a part contributing to the prior art, may be embodied in a form of a computer software product. The computer software product is stored on a storage medium (for example, a ROM/RAM, a magnetic disk, and a compact disc), and includes a plurality of instructions to cause a terminal (which may be a mobile phone, a computer, a server, an air-conditioner, a network device, or the like) to perform the method according to each embodiment of this application.

The embodiments of this application are described above with reference to the accompanying drawings, but this application is not limited to the specific implementations described above, and the specific implementations described above are merely illustrative and not restrictive. A person of ordinary skill in the art may further make many forms under the teaching of this application without departing from the purpose of this application and the protection scope of the claims, and these forms all fall within the protection scope of this application.

## Claims

1. A communication establishment method, comprising:
sending, by a first terminal device, a first request, wherein the first request is used for establishing a video call with a second terminal device, and
a sending condition of the first request comprises:
the first terminal device determines that a target data channel application is triggered, and that the second terminal device is incapable of using the target data channel application.

2. The method according to claim 1, further comprising:
sending, by the first terminal device, a second request when determining that the video call is successfully established, wherein the second request is used for establishing a data channel, and the data channel corresponds to the target data channel application.

3. The method according to claim 1, wherein the first request is further used for establishing a data channel, and the data channel corresponds to the target data channel application.

4. The method according to any one of claims 1 to 3, wherein determining, by the first terminal device, that the second terminal device is incapable of using the target data channel application in a case that a preset condition is satisfied, wherein the preset condition comprises at least one of the following:
the second terminal device supports no data channel;
a network in which the second terminal device is located supports no data channel; and
the second terminal device supports no target data channel application.

5. The method according to any one of claims 1 to 4, wherein the first request carries information for indicating sending only; and/or information for indicating playing a video.

6. The method according to any one of claims 1 to 5, wherein the sending condition of the first request further comprises:
a second network side device supports interworking on the target data channel application.

7. The method according to claim 6, wherein the sending condition of the first request further comprises:
the first terminal device supports interworking on the target data channel application.

8. The method according to claim 6, wherein that a second network side device supports interworking on the target data channel application comprises:
the second network side device supports converting of data of the target data channel application that is sent by the first terminal device through the data channel into video stream data and sending of the video stream data to the second terminal device.

9. The method according to claim 7, wherein that the first terminal device supports interworking on the target data channel application comprises:
the first terminal device supports sending of data of the target data channel application to the second network side device through the data channel.

10. The method according to claim 2, wherein the sending, by the first terminal device, a second request when determining that the video call is successfully established comprises:
sending, by the first terminal device, the second request in a case that a first response message is received,
wherein the first response message carries description information for indicating the second terminal device to accept the video call.

11. The method according to any one of claims 3 to 9, further comprising:
receiving, by the first terminal device, a second response message, wherein the second response message carries description information for indicating that the data channel is successfully established.

12. The method according to any one of claims 3 to 9, further comprising:
receiving, by the first terminal device, a third response message, wherein the third response message carries description information for indicating that establishment of the data channel fails.

13. The method according to any one of claims 1 to 12, further comprising:
determining, by the first terminal device, in a case that a selection operation and/or a download operation performed by a user on any data channel application in an application list is detected, that the data channel application is the target data channel application.

14. A communication establishment method, comprising:
sending, by a first network side device, a third request to a second terminal device, wherein the third request is used for establishing a video stream transmission connection between the second terminal device and a second network side device; and
a sending condition of the third request comprises at least one of the following:
the first network side device receives first information sent by a third network side device, wherein the first information is used for indicating establishment of the video stream transmission connection between the second terminal device and the second network side device, or the first information is used for indicating anchoring of a video stream transmission connection of the second terminal device to the second network side device; and
the first network side device receives a first request sent by a first terminal device, wherein the first request is used for establishing a data channel, and the data channel corresponds to a target data channel application.

15. The method according to claim 14, wherein the first request is further used for establishing a video call between the first terminal device and the second terminal device.

16. The method according to claim 15, wherein the first request carries information for indicating sending only; and/or information for indicating playing a video.

17. The method according to any one of claims 14 to 16, wherein the third request comprises request information for newly adding a video stream transmission connection corresponding to the second terminal device.

18. The method according to any one of claims 14 to 16, wherein that the first information is used for indicating anchoring of a video stream transmission connection of the second terminal device to the second network side device comprises:
the first information is used for indicating a peer end of the video stream transmission connection of the second terminal device to be configured as the second network side device.

19. The method according to any one of claims 14 to 18, further comprising:
sending, by the first network side device, a second response message to the first terminal device, wherein the second response message carries description information for indicating that the data channel is successfully established,
wherein a sending condition of the second response message comprises at least one of the following:
the first network side device determines that the second terminal device accepts the video call; and
the first network side device determines that establishment of the video stream transmission connection between the second terminal device and the second network side device is completed.

20. The method according to any one of claims 14 to 18, further comprising:
sending, by the first network side device, a third response message to the first terminal device, wherein the third response message carries description information for indicating that establishment of the data channel fails,
wherein a sending condition of the third response message comprises at least one of the following:
the first network side device determines that the second terminal device declines the video call; and
the first network side device determines that the establishment of the video stream transmission connection between the second terminal device and the second network side device fails.

21. The method according to any one of claims 14 to 20, wherein the first network side device comprises an application server in a network in which the first terminal device is located.

22. The method according to any one of claims 14 to 21, wherein the second network side device comprises a data channel media function in the network in which the first terminal device is located.

23. The method according to any one of claims 14 to 22, wherein the third network side device comprises a data channel signaling function in the network in which the first terminal device is located.

24. An information generation method, comprising:
generating and displaying, by a second terminal device, prompt information in a case that a first request is received,
wherein the first request is used for establishing a video call between a first terminal device and the second terminal device, and the first request carries information for indicating sending only, and/or information for indicating playing a video;
if the first request carries the information for indicating sending only, the prompt information is used for reminding a user to only receive the video call, and send no video call; and
if the first request carries the information for indicating playing a video, the prompt information is used for reminding the user to play video stream data of the video call.

25. A communication establishment apparatus, comprising:
a first request sending module, configured to send a first request, wherein the first request is used for establishing a video call with a second terminal device; and
a sending condition of the first request comprises:
the first terminal device determines that a target data channel application is triggered, and that the second terminal device is incapable of using the target data channel application.

26. A communication establishment apparatus, comprising:
a third request sending module, configured to send a third request to a second terminal device, wherein the third request is used for establishing a video stream transmission connection between the second terminal device and a second network side device; and
a sending condition of the third request comprises at least one of the following:
a first network side device receives first information sent by a third network side device, wherein the first information is used for indicating establishment of the video stream transmission connection between the second terminal device and the second network side device, or the first information is used for indicating anchoring of a video stream transmission connection of the second terminal device to the second network side device; and
the first network side device receives a first request sent by a first terminal device, wherein the first request is used for establishing a data channel, and the data channel corresponds to a target data channel application.

27. A terminal device, comprising a processor and a memory, wherein the memory stores a program or an instruction runnable on the processor, and when executed by the processor, the program or the instruction implements the steps of the communication establishment method according to any one of claims 1 to 13 or the information generation method according to claim 24.

28. A network side device, comprising a processor and a memory, wherein the memory stores a program or an instruction runnable on the processor, and when executed by the processor, the program or the instruction implements the steps of the communication establishment method according to any one of claims 14 to 23.

29. A readable storage medium, wherein the readable storage medium stores a program or an instruction, and when executed by a processor, the program or the instruction implements the steps of the communication establishment method according to any one of claims 1 to 13 or 14 to 23 or the information generation method according to claim 24.
